# EUROPÄISCHE PATENTANMELDUNG

(11) **EP 1 410 710 A1**
(43) Veröffentlichungstag der Anmeldung: **21.04.2004**
(21) Anmeldenummer: 03021900.0
(22) Anmeldetag: 27.09.2003
(51) Int. Cl.: A01G 13/02, A01G 1/00, A01G 9/10, A01C 1/04

(54) **Verwendung von Keratinfasern**

(30) Priorität: 27.09.2002 DE 10245514
(71) Anmelder: Sweredjuk, Robert, 87463 Reichholzried-Dietmannsried (DE)
(72) Erfinder: Sweredjuk, Robert, 87463 Reichholzried-Dietmannsried (DE)
(74) Vertreter: Hutzelmann, Gerhard

(57) **Zusammenfassung**

Die Erfindung bezieht sich auf eine Verwendung von Keratinfasern, insbesondere Schafwollfasern zur Beiordnung für Pflanzen, Gräser oder dergleichen..

## Beschreibung

Die Erfindung bezieht sich auf eine Verwendung von Keratinfasern, insbesondere Schafwollfasern.

Es besteht bei der Begrünung von Flächen oftmals das Problem, daß der Untergrund nicht stabil genug ist. So müssen zum Beispiel Straßenböschungen aufwendig befestigt werden, bevor eine Begrünung stattfinden kann. Trotzdem tritt bei starkem Regen immer wieder Erosion auf, die zum Teil ganze Böschungsstücke abrutschen lässt. Bei anderen Flächen tritt oftmals das Problem auf, daß der Untergrund zu sehr wasserdurchlässig ist, so daß eine schnelle Begrünung aufgrund von Wassermangel nur mittels aufwendiger Bewässerungsmaßnahmen stattfinden kann. Bei der Begrünung von Sportplätzen tritt zusätzlich noch das Problem auf, daß frisch eingesähter Rasen nur eine geringe Festigkeit aufweist, weswegen oftmals Mineraloder Glasfasern in das Erdreich eingebracht werden. Auch eine Vermischung des Sportplatzuntergrundes mit Sand, insbesondere Quarzsand ist eine beliebte Methode die Rasenfestigkeit bei Sportplätzen zu erhöhen.

Aufgabe der Erfindung ist es, eine Möglichkeit vorzuschlagen, die vorgenannten Probleme zu überwinden.

Diese Aufgabe wird erfindungsgemäß gelöst durch die Verwendung von Keratinfasern, insbesondere Schafwollfasern zur Beiordnung für Pflanzen, Gräser oder dergleichen.

Die Pflanzen können sich zwischen den Fasern verwurzeln und erhalten einen festen Halt.

Dabei hat es sich als sehr vorteilhaft erwiesen, wenn die Fasern in Form eines Vlieses vorgesehen sind.

Ein Vlies ist einerseits so elastisch, daß sich Wurzeln von Pflanzen darin verankern können, ohne behindert zu werden und andererseits ist es derart stabil, daß u.a. Erosion verhindert wird und den Pflanzen der notwendige Halt gegeben wird.

Es hat sich auch als sehr vorteilhaft erwiesen, wenn die Fasern zu einem Filz vernadelt sind.

Filze sind gegenüber Vliesen nochmals stabiler.

Eine weitere, erfindungsgemäß sehr vorteilhafte Ausgestaltung liegt auch darin, daß die Fasern zu einem losen Kreuzverbund zusammengefasst sind.

Es ist auch sehr vorteilhaft, wenn die Fasern verwebt oder verwirkt sind.

Ebenfalls als sehr vorteilhaft hat es sich erwiesen, wenn die Fasern in Fadengelegen ausgebracht werden.

Gemäß einer Fortbildung der Erfindung ist es auch sehr vorteilhaft, wenn die Fasern als Stapelfasern ausgebildet sind.

Erfindungsgemäß ist es auch sehr vorteilhaft, wenn die Fasern lose ausgebracht sind.

Eine äußerst vorteilhafte Fortbildung der Erfindung ist auch darin zu sehen, wenn die Fasern auf das Erdreich ausgebracht sind.

Hierdurch wird die Erdoberfläche befestigt. Die Pflanzen verwurzeln sich innerhalb der Faserlage und im Erdreich.

Es hat sich ebenfalls als sehr vorteilhaft erwiesen, wenn die Fasern von Erdreich bedeckt werden.

Hiermit ist sichergestellt, daß sich die Wurzeln der Pflanzen auf jeden Fall sowohl im Erdreich als auch in der Faserlage verankern.

Eine weitere äußerst vorteilhafte Ausgestaltung der Erfindung liegt auch darin, daß die Fasern mit Erdreich vermischt sind.

Dadurch sind die Fasern optimal im Erdreich verteilt und stabilisieren die Erde.

Eine sehr vorteilhafte Weiterbildung der Erfindung ist auch darin zu sehen, daß die Fasern als Feuchtigkeitsspeicher eingesetzt werden.

Dadurch werden die Pflanzen ständig mit einer ausreichenden Menge an Wasser versorgt, auch wenn eine Bewässerung nur sporadisch erfolgt.

Eine weitere äußerst vorteilhafte Verwendung liegt auch darin, daß die Fasern zum Zurückhalten von Wasser vorgesehen sind.

Verbunde aus Wollfasern vermögen eine sehr große Wassermenge aufzunehmen, die dann langsam wieder abgegeben wird. Das Wasser wird sowohl in den Keratinfasern gespeichert, als auch im Netz der Fasern festgehalten.

Es hat sich desweiteren als sehr vorteilhaft erwiesen, wenn die Fasern als Dünger eingesetzt werden.

Schafwollfasern enthalten einen Stickstoffanteil von rund 16%. Dieser Stickstoff wird bei der Verrottung der Fasern an die Pflanzen abgegeben.

Es ist dabei sehr vorteilhaft, wenn die Fasern als Langzeitdünger vorgesehen sind.

Die Verrottung der Fasern erfolgt langsam, wodurch der Stickstoff der Fasern über einen längeren Zeitraum abgegeben wird.

Eine ebenfalls sehr vorteilhafte Fortbildung der Erfindung liegt auch darin, daß die Fasern als Mittel zur Verhinderung von Erosion vorgesehen sind.

Durch die Fasern im oder auf dem Erdreich wird dieses zusammengehalten und vor Erosion geschützt.

Eine weitere, erfindungsgemäß sehr vorteilhafte Ausgestaltung liegt auch darin, daß die Fasern zur Befestigung von Hängen oder dergleichen vorgesehen sind.

Der elastische, aber dennoch stabile Faserverbund sorgt für eine Verfestigung der Hangfläche, ohne jedoch den Boden zu verdichten.

Eine äußerst vorteilhafte Fortbildung der Erfindung liegt auch darin, daß die Fasern zur Befestigung von z.B. Rasenuntergründen vorgesehen sind.

Hiermit lassen sich insbesondere Sportflächen nach einer Begrünung schneller nutzen.

Es hat sich als sehr vorteilhaft erwiesen, wenn die Fasern zur Unterstützung einer schnellen Begrünung von Flächen vorgesehen sind.

Die Fasern verhindern einerseits das Wegschwemmen des Erdreiches, andererseits aber auch einen Verlust an Pflanzensamen durch Wegschwemmen und/oder Vögel. Erde als Substrat für die Pflanzen wird nicht zwangsweise benötigt.

Eine sehr vorteilhafte Weiterbildung der Erfindung liegt auch darin, daß die Fasern mit anderen Materialien vermischt sind.

Dabei hat es sich als sehr vorteilhaft erwiesen, wenn die Fasern mit anderen fasrigen Stoffen vermischt sind.

Die Keratinfasern können mit Mineral- und/oder Glasfasern vermischt sein. Es ist aber je nach Anwendungsfall denkbar, daß die Fasern auch mit anderen Stoffen wie zum Beispiel Lehm oder dergleichen vermischt werden.

Es hat sich desweiteren gemäß einer weiteren Ausgestaltung der Erfindung als sehr vorteilhaft erwiesen, wenn die Fasern mit einem Dünger vermischt sind.

Eine äußerst vorteilhafte Ausgestaltung liegt auch darin, daß die Fasern mit einem Dünger, insbesondere einem Kurzzeitdünger, versetzt, vorzugsweise imprägniert sind.

Hierdurch kann das durch die Fasern gebildete Pflanzensubstrat genau auf den Nährstoffbedarf der Pflanzen abgestimmt werden.

Die Erfindung wird anhand eines Ausführungsbeispiels veranschaulicht.

Keratinfasern, insbesondere Schafwollfasern werden in Form loser Fasern, Stapelfaser, Geweben, Gewirken, Vliesen, Filzen oder dergleichen als Substrat für Pflanzen und Gräser verwendet. Dabei können die Fasern mit Erde vermischt oder eingebettet sein. Es ist aber auch denkbar, daß die Fasern in Form einer Auflage auf einen Untergrund aufgebracht sind. Die Keratinfasern verfestigen und stabilisieren das Substrat und bieten den Pflanzen Halt. Die Wurzeln der Pflanzen verankern sich innerhalb des Verbundes aus Keratinfasern. Eine Verdichtung des Substrates findet nicht statt, da die Faserverbunde dreidimensionale Netzwerke darstellen die Luftzwischenräume einschließen.

Hänge, Böschungen und dergleichen können mit Keratinfasern versetzt werden, wobei sich dabei je nach Anwendungsfall unterschiedliche Faserverbunde nutzen lassen. Die Keratinfasern stabilisieren und verfestigen die Hänge und Böschungen. Erosion durch Regen wird dadurch verhindert. Zudem halten die Keratinfasern Feuchtigkeit zurück und speichern diese zum Teil innerhalb der Fasern. Die gesamte aufgenommene Feuchtigkeit wird langsam an die Umgebung, d.h. an die Pflanzen abgegeben. Der Feuchtigkeitshaushalt des Substrates wird dadurch reguliert. Das Wasserrückhaltevermögen und die Möglichkeit der Feuchtigkeitsspeicherung ermöglichen auch die Begrünung von stark wasserdurchlässigen Böden, wie z.B. Sandböden, Wüsten oder dergleichen, ohne daß ein Großteil des Wassers nutzlos versickert.

Desweiteren wirken die Keratinfasern als Stickstofflangzeitdünger. Schafwolle enthält ca. 16% Stickstoff, der beim Verrotten langsam an die Pflanzen abgegeben wird. Zusätzlich können die Fasern mit weiteren Düngern vermischt, versetzt oder imprägniert werden. Dies ermöglicht eine optimale Abstimmung des Substrates auf den Nährstoffbedarf der Pflanzen.

Die Keratin-Faser-Verbunde eignen sich auch zur schnellen Begrünung von Flächen. Durch die vorgenannten Möglichkeiten der Wasserspeicherung, der Düngung und der Stabilisierung können Faserverbunde z.B. in Form einer Auflage auf Flächen wie Sportplätzen ausgebracht werden. Pflanzensamen verfangen sich beim Einsäen zwischen den Fasern, wodurch diese nicht mehr durch Vögel weggepickt und durch Wind und/oder Wasser fortgetragen werden können. Sobald die Pflanzen wachsen, verfangen sich die Wurzeln sowohl im Faser-Verbund als auch in der Unterlage, die zumeist Erdreich darstellt. Die Pflanzen, meist Gräser oder dergleichen, sind fest verwurzelt. Das Substrat wird durch die Keratinfasern stabilisiert, wodurch insbesondere Sportflächen widerstandsfähiger werden. Es ist auch denkbar, daß der Faser-Verbund in die Unterlage eingebracht wird.

Eine andere Anwendungsmöglichkeit besteht bei der Begrünung von Böschungen insbesondere beim Straßen und Schienenbau. Dort werden oftmals Jute- oder Stroh-Beläge zum Befestigen der Böschungen verwendet. Trotzdem sind immer wieder Abrutschungen und/oder vertrocknete Pflanzen zu beobachten. Dies tritt mit den beschriebenen Faser-Verbunden nicht auf.

Die Faserverbunde können mit anderen Materialien versetzt oder vermischt sein. Dabei ist vor allem eine Vermischung mit Mineral- oder Glasfasern denkbar. Die Verbunde können dadurch auf den jeweiligen Anwendungsfall sehr gut eingestellt werden.

Durch Keratin-Faser-Verbunde treten keinerlei Umweltbelastungen auf. Sie sind biologisch abbaubar. Zudem handelt es sich um einen nachwachsenden Rohstoff.

Bei der Begrünung von Sportanlagen ist es denkbar, daß auf eine vorzugsweise 15cm hohe Erd-/Humus-Schicht Wollfasern in der Art eines Streugutes aufgebracht werden. Um eine besonders gute Elastizität und dennoch große Haltbarkeit des Bodenaufbaus zu gewährleisten, sollten pro Quadratmeter Bodenfläche 620 bis 650 g Wollfasern aufgebracht werden.

Die Wollfasern werden dann z.B. mit einer Humusfräse in die Humusschicht eingearbeitet.

Eine besonders gute Verteilung der Wollfasern im Erdreich lässt sich erzielen, wenn die Länge der Wollfasern z.B. durch Schneiden begrenzt wird. Zum Beispiel kann die Wolle auf 3cm Faserlänge geschnitten werden. Es ist aber auch je nach Anwendungsfall denkbar, daß die Fasern kürzer oder länger geschnitten werden. Denkbar sind dabei Faserlängen zwischen 1,5 und 3,5cm.

Nachdem die Wollfasern in die Erd-/Humus-Schicht eingearbeitet sind, muss das Substrat nur noch eingebnet, nivelliert und eingesäht werden. Nach kurzen Bewässerungsmaßnahmen werden die eingesähten Samen aufgehen und für eine gleichmässige Begrünung sorgen.

Es ist aber auch denkbar, daß als Untergrund ein Keratinfaser-Vlies oder Gewebe vorgesehen ist, welches zum Beispiel als Nadelvlies in einer Dicke zwischen 5 und 10 mm ausgeführt sein kann. Ein derartiges Vlies besitzt ein hohes Wasserrückhaltevermögen, wodurch ein Versickern von Wasser weitgehend verhindert wird und zudem das gespeicherte Wasser langsam wieder an das darüberliegende Substrat bzw. an die darin angesiedelten Pflanzen abgegeben wird.

Zusätzlich absorbieren die Keratinfasern des Vlieses noch bis zu 35 Gew. % an Wasserdampf, die ebenfalls an das Substrat abgegeben werden können.

Desweiteren bietet ein derartiges Vlies oder Gewebe dem Wurzelwerk der Pflanzen zusätzlichen Halt.

Auf das Vlies oder Gewebe wird ein Substrat aufgebracht, das wie zuvor beschrieben mit Wollfasern versetzt werden kann.

Insbesondere bei der Begrünung von Park- bzw. Grünanlagen z.B. in trockenen (Wüsten-)Gegenden genügt anders als bei der Sportplatzbegrünung eine Keratinfaseranteil im Substrat von zirka 400g pro Quadratmeter, da keine so hohe Festigkeit und Elastizität des Substrates benötigt wird, wie bei Sportanlagen.

In allen Fällen sollten die Keratinfasern gewaschen, jedoch ansonsten unbehandelt sein. Das den Fasern im Urzustand anhaftende Wollfett behindert die im Substrat ablaufenden Prozesse.

Es ist denkbar, daß auch noch der Anteil an gekräuselter Wollfaser variiert wird.

Wollfasern sind unter Sauerstoffabschluß z.B. im Substrat oder als Unterlage nahezu unverrottbar. Allenfalls alkalische Einflüsse durch z.B. alkalischen Boden können die Faser schädigen.

Deswegen ist es auch denkbar, daß bei alkalischen Böden, die begrünt werden sollen, entweder der pH-Wert der Wolle z.B. beim Waschen in Richtung sauer verschoben, oder aber der alkalische Boden angesäuert wird.

Denkbar ist es, daß als Milieu der Wollfasern im Substrat ein pH-Wert zwischen 5,5 und 5,8 angestrebt wird.

## Patentansprüche

1. Keratinfasern, insbesondere Schafwollfasern, **gekennzeichnet durch** die Verwendung der Fasern zur Beiordnung für Pflanzen, Gräser oder dergleichen.

2. Verwendung nach Anspruch 1, **dadurch gekennzeichnet, daß** die Fasern in Form eines Vlieses vorgesehen, zu einem Filz vernadelt, zu einem losen Kreuzverbund zusammengefasst, die Fasern verwebt oder verwirkt, die Fasern in Fadengelegen ausgebracht und/oder die Fasern als Stapelfasern zusammengefasst sind.

3. Verwendung nach einem der vorangehenden Ansprüche, **dadurch gekennzeichnet, daß** die Fasern lose ausgebracht sind.

4. Verwendung nach einem der vorangehenden Ansprüche, **dadurch gekennzeichnet, daß** die Fasern auf das Erdreich ausgebracht sind.

5. Verwendung nach einem der vorangehenden Ansprüche, **dadurch gekennzeichnet, daß** die Fasern von Erdreich bedeckt werden und/oder mit Erdreich vermischt sind.

6. Verwendung nach einem der vorangehenden Ansprüche, **dadurch gekennzeichnet, daß** die Fasern als Feuchtigkeitsspeicher eingesetzt werden und/oder zum Zurückhalten von Wasser vorgesehen sind.

7. Verwendung nach einem der vorangehenden Ansprüche, **dadurch gekennzeichnet, daß** die Fasern als Dünger, insbesondere als Langzeitdünger eingesetzt werden.

8. Verwendung nach einem der vorangehenden Ansprüche, **dadurch gekennzeichnet, daß** die Fasern als Mittel zur Verhinderung von Erosion vorgesehen sind.

9. Verwendung nach einem der vorangehenden Ansprüche, **dadurch gekennzeichnet, daß** die Fasern zur Befestigung von Hängen oder dergleichen, z.B. Rasenuntergründen vorgesehen sind.

10. Verwendung nach einem der vorangehenden Ansprüche, **dadurch gekennzeichnet, daß** die Fasern zur Unterstützung einer schnellen Begrünung von Flächen vorgesehen sind.

11. Verwendung nach einem der vorangehenden Ansprüchen, **dadurch gekennzeichnet, daß** die Fasern mit anderen Materialien vermischt sind.

12. Verwendung nach Anspruch 11, **dadurch gekennzeichnet, daß** die Fasern mit anderen fasrigen Stoffen vermischt sind.

13. Verwendung nach Anspruch 11 oder 12, **dadurch gekennzeichnet, daß** die Fasern mit einem Dünger, insbesondere einem Kurzzeitdünger vermischt und/oder versetzt, vorzugsweise imprägniert sind.
